# EUROPÄISCHE PATENTANMELDUNG

(11) **EP 1 916 513 A1**
(43) Veröffentlichungstag der Anmeldung: **30.04.2008**
(21) Anmeldenummer: 06022483.9
(22) Anmeldetag: 27.10.2006
(51) Int. Cl.: G01N 21/03, G01N 21/27, G01N 21/85

(54) **Inline-Photometervorrichtung und Kalibrierverfahren**

(71) Anmelder: optek-Danulat GmbH, 45356 Essen (DE)
(72) Erfinder: Meyer, Richard Gerard, Mequon Wisconsin 53092 (US)
(74) Vertreter: Schweiger, Johannes

(57) **Zusammenfassung**

Die Erfindung betrifft eine inline-Photometervorrichrung mit einer Lichtquelle (6), einem davon beabstandeten Photodetektur (7), einer im Strahlengang (8) zwischen Lichtquelle (6) und Photdetektor (7) angeordneten, von einem zu vermessenden Fluid dürchfließbaren Messzelle (2), und mit einer Kalibriervorrichtung (9) zur Kalibrierung und/oder Validierung der Inline-Photornetervorrichtung (1), wobei die Kalibriervorrichtung (9) Haltemittel (10) zur Anordnung eines Referenzteils im Strahlengang aufweist. Erfindungsgemäß ist vorgesehen, dass das Referenzteil (11) mit einem Referenzfluid (12) gefüllt oder befüllbar ist.

## Beschreibung

Die Erfindung betrifft eine Inline-Photometervorrichtung gemäß dem Oberbegriff des Anspruchs 1 sowie eine Kalibriervorrichtung für eine Inline-Photometervorrichtung gemäß dem Oberbegriff des Anspruchs 2 und ein Kalibrierverfahren für die Vermessung eines Fluids mit einer Inline-Photometervorrichtung.

Inline-Photometervorrichtungen sind hinlänglich bekannt und werden in den vielfältigsten Bereichen der Technik, beispielsweise in der Pharmaindustrie, der chemischen Industrie sowie bei der Getränke- und Nahrungsmittelherstellung eingesetzt, um unmittelbar während des Produktionsprozesses - inline - photometrische Analysen von Fluiden durchzuführen. Hierzu ist die Messzelle von Inline-Photometervorrichtungen unmittelbar in einer Hauptrohrleitung oder gegebenenfalls in einer Bypass-Leitung integriert, bzw. wird von diesen gebildet.

Inline-Photometer sind mit einer Lichtquelle, beispielsweise für ultraviolettes Licht (UV), sichtbares Licht (VIS) und/oder Infrarotlicht (NIR) ausgerüstet. Das von der Lichtquelle ausgesandte elektromagnetische Spektrum durchdringt die von einem zu vermessenden Medium durchflossene Messzellc und gelangt zu einem Photodetektor, mit dem die Intensität einer bestimmten Wellenlänge oder eines Wellenlängenbereiches der ankommenden elektromagnetischen Strahlung messbar ist. Die gemessene Intensität ist umgekehrt proportional zu der Absorption des zu vermessenden Mediums und dieses wiederum annähernd proportional zu einer bestimmten Stoffkonzentration oder anderen physikalischen Eigenschaften des zu vermessenden Mediums.

Um die vorgenommenen Messungen zu standardisieren, sind Inline-Photometervorrichtungen bekannt, die mit einer Kalibriereinrichtung ausgestattet sind, welche Haltemittel aufweisen, die zur Anordnung eines Feststoff-Referenzfilters im Strahlengang dienen. Mittels einer derartigen Kalibriervorrichtung ist die Inline-Photometervorrichtung nicht nur kalibrierbar, sondern auch validierbar, d.h. es kann die Leistungsfähigkeit der Inline-Photometervorrichtung, insbesondere in Bezug auf die maximale photometrische Genauigkeit, die Wcllcnlängengenauigkeit oder bezüglich des Streulichtanteils überprüft werden.

Die Genauigkeit des Absorptionsverhaltens der zum Einsatz kommenden Referenz-Feststofffilter ist jedoch für einige Anwendungen nicht ausreichend hoch.

Der Erfindung liegt daher die Aufgabe zugrunde, eine Inline-Photometer vorrichtung sowie eine Kalibriervorrichtung und ein entsprechendes Kalibrierverfahren anzugeben, mit denen eine hochgcnauc Validierung und/oder Kalibrierung möglich ist.

Diese Aufgabe wird mit einer Inline-Photometervorrichtung mit den Merkmalen des Anspruchs 1 sowie mit einer Kalibriervorrichtung mit den Merkmalen des Anspruchs 2 gelöst. Vorteilhafte Weiterbildungen der Erfindung sind in den Unteransprüchen angegeben. In den Rahmen der Erfindung fallen auch sämtliche Kombinationen aus zumindest zwei der in der Beschreibung, den Ansprüchen und/oder den Zeichnungen offenbarten Merkmale.

Der Erfindung liegt der Gedanke zugrunde, anstelle eines Referenz-Feststofffilters ein Referenzteil vorzusehen, welches mit einer Referenzflüssigkeit gefüllt oder befüllbar ist. Nach dem an sich bekannten Validierungs- oder Kalibrierungsvorgang wird das Keferenzteil in der Regel wieder aus dem oder den Haltemitteln der Kalibriervorrichtung bzw. aus dem Strahlengang der Inline-Photometervorrichtung entfernt, um Inline-Messungen des Fluids in der Messzelle vornehmen zu können. Für einige Anwendungsfälle kann es jedoch sinnvoll sein, das mit Referenzflüssigkeit gefüllte Referenzteil während der Inline-Messung im Strahlengang zu belassen. Die mit einer beschriebenen Kalibriervorrichtung ausgestattete Inline-Photometervorrichtung kann aufgrund der Verwendung einer bezüglich des Absorptionsverhaltens exakt definierbaren Referenzflüssigkeit hochgenau validiert bzw. kalibriert werden, wodurch die mit der Inline-Photometervorrichtung erzielbaren Messgenauigkeiten wesentlich erhöht werden. Die zum Einsatz kommenden Referenzteile, die mit einer Referenzllüssigkeit gefüllt bzw. befüllbar sind, können bei allen bekannten Inline-Photometervorrichtungen eingesetzt werden. Lediglich beispielhaft seien Interferenz-Filter-Photometer oder Spektralphotometer genannt. Wesentlich ist, dass das Referenzteil mittels der Kalibriervorrichtung im Strahlengang, vorzugsweise außerhalb der von dem zu vermessenden Fluid durchfließbaren Messzelle, angeordnet werden kann. Als Lichtquelle für die erfindungsgemäße Inline-Photometervorrichtung kann eine Lichtquelle für ultraviolettes, sichtbares und/oder Infrarotlicht eingesetzt werden. Insbesondere können Quecksilber-. Hochdruck-, LED-, Halogen-, Deuterium-, Zink- oder Wolframlampen eingesetzt werden. Darüber hinaus ist der Einsatz von Lasern als Lichtquelle denkbar. Als Photodetektoren kommen vorzugsweise Halbleiterdetektoren, insbesondere Photodioden zum Einsatz.

In Ausgestaltung der Erfindung ist mit Vorteil vorgesehen, dass das Referenzteil eine transluzente Küvette ist, welche ein Kalibriervolumen begrenzt, welches mit Referenzflüssigkeit gefüllt bzw. befüllbar ist. Die Küvette wird in das oder die Haltemittel der Kalibriervorrichtung derart eingesetzt, dass sie in den Strahlengang zwischen Lichtquelle und Photodetektor hineinreicht.

Als Referenzflüssigkeiten können speziell als Referenzflüssigkeit konzipierte Flüssigkeiten mit hochgenauem Absorptionsverhalten, aber auch die Prozessflüssigkeiten mit z.B. durch Laborspektrometer genau vorher bestimmtem Absorptionsverhalten zum Einsatz kommen. Da die zum Einsatz kommenden Referenzflüssigkeiten - auch aufgrund ihres hochgenauen Absorptionsverhaltens - äußerst kostenintensiv sind, ist in Ausgestaltung der Erfindung vorgesehen, das Kalibriervolumen nur so groß wie unbedingt nötig auszubilden. Dies wird bevorzugt dadurch erreicht, dass die Küvette derart ausgeformt ist, dass der Durchmesser des Kalibriervolumens in Strahlengangrichtung, also in der durchstrahlten Richtung, geringer ist als in die horizontale und/oder die senkrechte Richtung hierzu.

Von besonderem Vorteil ist es, wenn die Küvette als flaches Bauteil ausgebildet, ist, also bevorzugt zwei parallele, sich quer zum Strahlengang erstreckende Seitenwände aufweist. Diese Seitenwände begrenzen mit ihren vorzugsweise ebenen inneren Oberflächen das Kalibriervolumen und sind bevorzugt aus hochqualitativem UV-Quarzglas ausgebildet. Das Glas sollte frei von Blasen sein (DIN 58927 Klasse 0). Ferner sollte das zum Einsatz kommende Glas frei von Riefen, Einschlüssen oder partikulärem Material sein (MIL - 0 - 13830A)). Beide Oberflächen jeder der Seitenwände sollten optisch poliert sein und eine Rauhigkeit Rₐ = 0,8 µm oder besser aufweisen. Von Vorteil ist es ferner, wenn das Lichtdurchlnssvermögen größer ist als 80% in einem Wellenlängenbereich zwischen 254 nm und 1100 nm. Weiterhin sollte das zum Einsatz kommende Glas bevorzugt fluoreszenzfrei sein. Zusätzlich zu den quer zur Strahlenrichtung verlaufenden Seitenwänden sind vorzugsweise auch sämtliche übrigen Seitenwände der Küvette aus hochqualitativem Quarzglas ausgebildet. Alternativ zu Quarzglas kann auch Saphir- oder Borosilikatglas oder jedes andere für den entsprechenden Spektralbereich geeignete Fenster verwendet werden.

Von besonderem Vorteil ist es, wenn die Küvette zwei Öffnungen aufweist, die mit dem Kalibriervolumen kommunizieren. Mittels der Öffnungen ist es möglich, das Kalibriervolumen mit Referenzflüssigkeit zu füllen, das Kalibriervolumen zu spülen und/oder die Referenzflüssigkeit aus dem Kalibriervolumen abzuzichen.

Von Vorteil ist es, wenn die, vorzugsweise als Kanäle ausgebildeten Öffnungen, insbesondere mittels einer Verschlusskappe verschließbar sind, um eine Verschmutzung oder sonstige Beeinträchtigung des hochgenauen Referenzfluids zu vermeiden.

Um ein Auslaufen der Referenzflüssigkeit aus der Küvette zu verhindern, sind die Öffnungen bevorzugt auf der Oberseite der Küvette angeordnet.

Damit ein rückstandsfreies Spülen des Kalibriervolumens gewährleistbar ist, ist in Ausgestaltung der Erfindung mit Vorteil vorgesehen, dass das Kalibriervolumen, zumindest in einem unteren Bereich, eine bogenförmige Kontur aufweist, d.h. insgesamt vorzugsweise U-förmig ausgeformt ist. Durch die U-förm wird ein, insbesondere laminares, Abströmen des gesamten Referenzfluids aus der Küvette heraus ermöglicht.

Besonders zweckmäßig ist es, auf der Oberseite der Küvette eine lichtundurchlässige Deckplatte, vorzugsweise aus schwarzem Quarzglas vorzusehen, um Fremdlichteinflüsse zu minimieren. Vorzugsweise sind die zuvor erwähnten Öffnungen zum Befüllen, Spülen und/oder Entleeren der Küvette in diese Deckplatte eingebracht.

Mit Vorteil ist vorgesehen, dass Positionierungsmittel zur exakten Positionierung der Küvette in den Haltemitteln vorgesehen sind, um eine exakte Anstrahlung der Küvette, vorzugsweise exakt im 90° Winkel, zu gewährleisten. Wenn die Positioniermittel mit einer Schräge verschen sind, wird durch sie gleichzeitig die Haltepositionsfindung erleichtert.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1: eine schematische Darstellung einer Inline-Photometervorrichtung mit einer Kalibriervorrichtung,
- Fig. 2: ein als Küvette ausgebildetes Referenzteil zum Einsatz in dic Kalibriervorrichtung in einer Seitenansicht,
- Fig. 3: die Küvette gemäß Fig. 2 in einer um 90° gedrehten Ansicht,
- Fig. 4: eine Draufsicht auf die Inline-Photometervorrichtung gemäß Fig. 1,
- Fig. 5: eine Seitenansicht einer Küvette,
- Fig. 6: eine um 90° gedrehte Ansicht der Küvette gemäß Fig. 5 und
- Fig. 7: eine Draufsicht auf die Küvette gemäß den Fig. 5 und 6.

In den Figuren sind gleiche Bauteile und Bauteile mit der gleichen Funktion mit den gleichen Bezugszeichen gekennzeichnet.

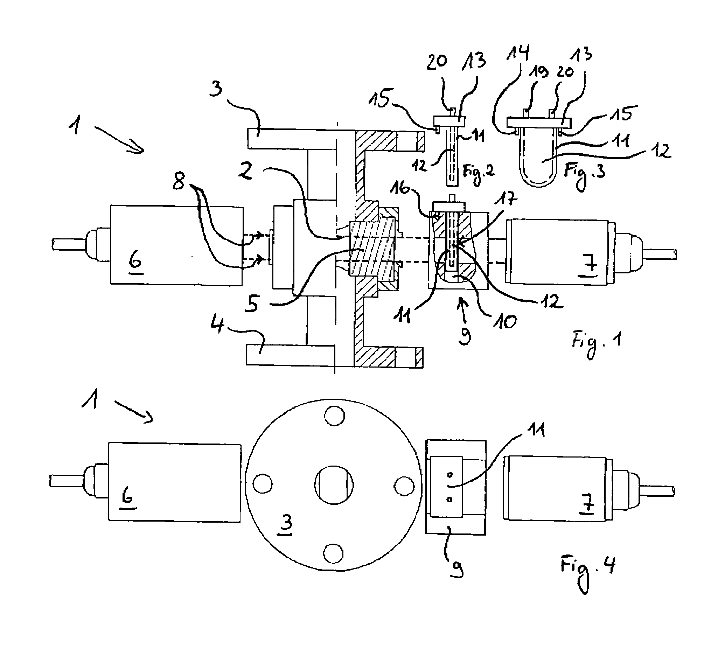

In den Fig. 1 und 4 ist eine Inline-Photometervorrichtung 1 gezeigt. Kernstück der Inline-Photometervorrichtung 1 ist eine rohrförmige Messzelle 2, die mittels zweier beabstandeter Montageflansche 3, 4 in ein Rohrsystem integrierbar ist. Die Messzelle 2 weist zwei diametral gegenüberliegende Quarzglasscheiben 5 auf, von denen nur die in der Zeichnungsebene rechte Quarzglasscheibe in der geschnitten dargestellten Hälfte der Messzelle 2 zu erkennen ist.

In der Zeichnungsebene links von der Messzellc 2 ist eine als Black Box dargestellte, als Wolframlampe ausgebildete Lichtquelle 6 angeordnet, wobei zwischen der Lichtquelle 6 und der Messzclle 2 in der Black Box in an sich bekannter Weise eine nicht näher dargestellte Optikeinheit, insbesondere mit Fokussierlinsen und/oder Polfiltern, angeordnet ist.

Auf der der Lichtquelle 6 gegenüberliegenden Seite der Messzelle 2 ist ein Photodetektor 7 angeordnet. Der Strahlengang 8 des von der Lichtquelle 6 erzeugten Lichtes verläuft durch die nicht gezeigte, linke Quarzglasscheibe in die von dem zu vermessenden Fluid durchströmte Messzelle hinein und auf der gegenüber liegenden Seite durch die Quarzglasscheibe 5 wieder aus der Messzelle 2 hinaus und verläuft geradeaus weiter bis zu dem Photodetektor 7, welcher in bekannter Weise die Lichtintensität misst.

In dem Strahlengang 8 ist eine Kalibriervorrichtung 9 angeordnet, welche als Schlitz ausgebildete Haltemittel 10 zur Aufnahme eines als flache Küvette ausgebildeten Referenzteils 11 aufweist. Die Küvette 11 ist mit einem Referenzfluid 12 gefüllt, so dass die Inline-Photometervorrichtung in an sich bekannter Weise kalibrierbar und/oder validierbar ist.

Wie aus den Fig. 2 und 3 ersichtlich ist, weist die flache, in einem oberen Bereich rechteckig konturierte Küvette 11 eine obere Deckplatte 13 aus einem lichtundurchlässigem schwarzen Quarzglas auf. Die Deckplatte 13 sieht allseitig über, wodurch eine Umfangsschulter gebildet ist, mit der die Küvette auf dem oberen Umfangsrand der als Schlitz ausgebildeten Haltemittel 10 aufliegt. An der Deckplatte 13 sind zwei Ausrichtpins 14, 15 vorgesehen, die in formkongruente Aufnahmeöffnungen 16 in der Kalibriereinrichtung 9 einsteckbar sind, wodurch die Küvette 11 exakt ausgerichtet ist.

Wie insbesondere aus Fig. 1 zu erkennen ist, ragt die Küvette 11 mit einem Bereich 17 in den Strahlengang 8 hinein. Nach der Kalibrierung kann die Küvette 1 1 aus den Haltemitteln 10 und damit aus dem Strahlengang 8 entfernt werden. Es kann auch die gesamte Kalibriervorrichtung 9 entnommen werden.

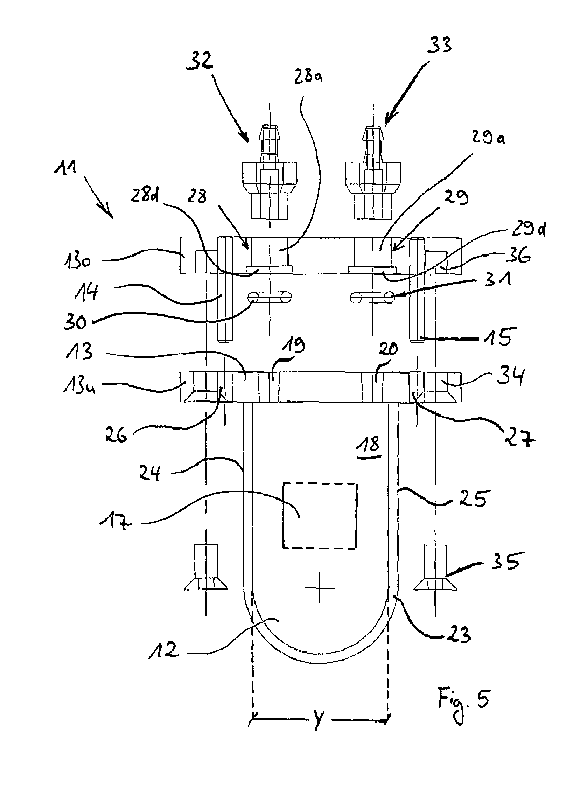

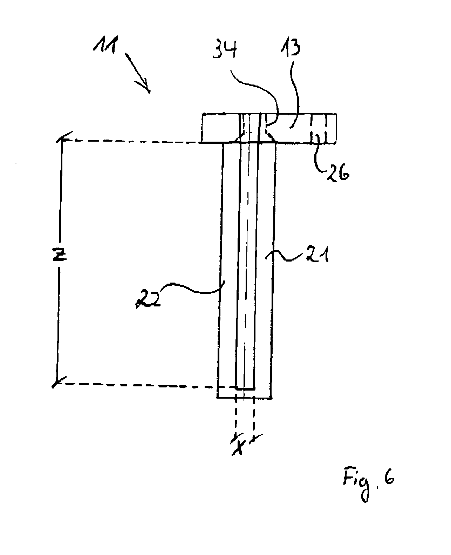

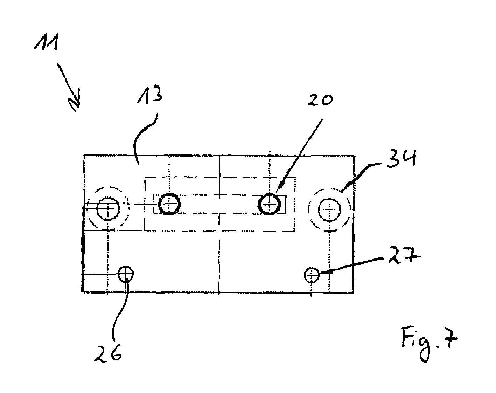

In den Fig. 5 bis 7 ist die in den Fig. 1 bis 3 schematisch dargestellte Küvette 11 im Detail dargestellt. Zu erkennen ist in Fig. 5, dass die Küvette im unteren Bereich abgerundet ist, so dass sie im Wesentlichen eine U-Form aufweist. Die Küvette 11 umschließt ein mit Referenzflüssigkeit 12 füllbares Aufnahmevolumen 18. Das Aufnahmevolumen 18 ist über eine als Kanal ausgebildete Öffnung 19, 20 mit Referenzflüssigkeit befüllbar, wobei über die jeweils andere Öffnung 20, 19 die in dem Aufnahmevolumen 18 vorhandene Luft entweichen kann. Die Öffnungen 19, 20 sind in der bereits erwähnten Deckplatte 13 aus schwarzem Quarzglas eingebracht.

Die Deckplatte 13 kann aus einer das Aufnahmevolumen 18 begrenzenden unteren Platte 13u und einer darüber angeordneten Anschlussplatte 130 gebildet sein. Die untere Platte 13u weist die Öffnungen 19, 20 sowie Bohrungen 26, 27 zum formkongruenten Durchgang der Ausrichtpins 14, 15 auf, während die Anschlussplatte 130 mit den Ausrichtpins 14, 15 fest verbunden ist. In Flucht mit den Öffnungen 19, 20 weist die Anschlussplatte 130 weiterhin Durchgangsöffnungen 28, 29 mit je einem der unteren Platte 13u zugewandten Dichtungsabschnitt 28d, 29d zur Aufnahme von Dichtungsringen 30, 31 auf. Die Dichtungsringe 30, 31 können vorteilhaft auch als Dichtungsplatten ausgestaltet sein.

Oberhalb der Dichtungsabschnitte 28d, 29d sind formkongruent zu zwei Anschlüssen 32, 33 Aufnahmeabschnitte 28a, 29a zur Aufnahme der Anschlüsse 32, 33 angeordnet. Die Dichtungsringe 30, 31 dichten die Anschlüsse 32, 33 und die Öffnungen 19, 20 an deren gegenüberliegenden Seiten gegen die Umgebung ab, so dass die Referenzflüssigkeit 12 nicht aus dem durch die Anschlüsse 32, 33 und Öffnungen 19, 20 gebildeten Kanal entweichen kann.

Die Anschlüsse 32, 33 sind mit nicht näher dargestellten Abdeckkuppen verschließbar. Es ist auch denkbar, dass keine Öffnungen zum Befüllen des Aufnahmevolumens 18 vorgesehen sind. In einem derartigen Fall ist die Küvette bereits fertig mit einer vollkommen isolierten Referenzflüssigkeit vorkonfektioniert.

Der Durchmesser x des Kalibriervolumens 18 ist in Richtung Strahlengang 8 wesentlich kleiner als die Erstreckung y in waagerechter Richtung und als die Erstreckung z in senkrechter Richtung. Hierdurch ist das Kalibriervolumen 18 minimal, wodurch insbesondere beim Verbrauch der Referenzflüssigkeit 12 erhebliche Kosten eingespart werden können. Das Kalibriervolumen 18 wird von zwei parallelen, quer zu dem Strahlengang 8 angeordneten Seitenwänden aus transluzentem Quarzglas begrenzt, wobei beide sich gegenüber liegenden Oberseiten jeder der Seitenwände 21, 22 eben ausgebildet sind. Um eine exakte Ausrichtung der Küvette 11 quer zu dem Strahlengang 8 zu ermöglichen, sind die erwähnten Ausrichtpins 14, 15 vorgesehen.

Der dem Strahlengang 8 ausgesetzte Bereich 17 der Küvette 11 ist in Fig. 5 in strichliniert gekennzeichnet.

Senkrecht zu den sich gegenüberliegenden Seitenwänden 21, 22 ist eine Umfangswand 23 aus Quarzglas angeordnet, die die Seitenwände 21, 22 in Strahlengangrichtung miteinander verbindet. Anders ausgedrückt ist das Kalibriervolumen 18 von den parallelen Seitenwänden 21, 22 und von der Umfangswand 23 begrenzt. In einem unteren Bereich der Küvette ist die Umfangswand quer zum Strahlengang gerundet und geht im oberen Bereich in zwei parallele Wandabschnitte 24, 25 über.

### Bezugszeichenliste

### Inline-Photometervorrichtung und Kalibrierverfahren

- **1**: Inline-Photomctcrvorrichtung
- **2**: Messzelle
- **3**: Montageflansch
- 4: Montageflansch
- **5**: Quarzglasscheibe
- **6**: Lichtquelle
- **7**: Photodetektor
- **8**: Strahlengang
- **9**: Kalibriervorrichtung
- **10**: Haltemittel
- **11**: Küvette
- **12**: Referenzfluid
- **13**: Deckplatte
- **13u**: untere Platte
- **130**: Anschlussplatte
- **14**: Ausrichtpin
- **15**: Ausrichtpin
- **16**: Aufnahmeöffnungen
- **17**: Bereich
- **18**: Aufnahmevolumen
- **19**: Öffnung
- **20**: Öffnung
- **21**: Seitenwand
- **22**: Seiten wand
- **23**: Umfangswand
- **24**: Wandabschnitt
- **25**: Wandabschnitt
- **26**: Bohrung
- **27**: Bohrung
- **28**: Durchgangsöffnung
- **28a**: Aufnahmeabschnitt
- **28d**: Dichtungsabschnitt
- **29**: Durchgangsöffnung
- **29a**: Aufnahmeabschnitt
- **29d**: Dichtungsabschnitt
- **30**: Dichtungsring
- **31**: Dichtungsring
- **32**: Anschluss
- **33**: Anschluss
- **34**: Bohrung mit Anfasung
- **35**: Schraube
- **36**: Gewindebohrung
- **x**: Durchmesser in Strahlengangrichtung
- **y**: Erstreckung in waagerechter Richtung
- **z**: **Erstreckung in senkrechter Richtung**

## Patentansprüche

1. Inline-Photometervorrichtung mit einer Lichtquelle (6), einem davon beabstandeten Photodetektor (7), einer im Strahlengang (8) zwischen Lichtquelle (6) und Photdetektor (7) angeordneten, von einem zu vermessenden Fluid durchfließbaren Messzelle (2), und mit einer Kalibriervorrichtung (9) zur Kalibrierung und/oder Validierung der Inline-Photometervorrichtung (1), wobei die Kalibriervorrichtung (9) Haltemittel (10) zur Anordnung eines Referenzteils im Strahlengang aufweist,
**dadurch gekennzeichnet,**
**dass** das Referenzteil (11) mit einem Referenzfluid (12) gefüllt oder befüllbar ist.

2. Kalibriervorrichtung einer Inline-Photometervorrichtung (1) mit Haltemitteln (10) zur Anordnung eines Referenzteils (11) im Strahlengang (8) der Inline-Photometervorrichtung (1),
**dadurch gekennzeichnet,**
**dass** das Referenzteil (11) mit einem Referenzfluid (12) gefüllt oder befüllbar ist.

3. Vorrichtung nach Anspruch 1 oder 2,
**dadurch gekennzeichnet,**
**dass** das Referenzteil (11) eine ein Kalibriervolumen (8) begrenzende, transluzente Küvette ist.

4. Vorrichtung nach einem dcr vorhergehenden Ansprüche,
**dadurch gekennzeichnet,**
**dass** der Durchmesser (x) des Kalibriervolumens (18) in Richtung Strahlengang (8), zumindest in einem durchstrahlten Bereich (17) der Küvette, geringer ist als in jede Querrichtung (y, z) hierzu.

5. Vorrichtung nach einem der Ansprüche 3 oder 4,
**dadurch gekennzeichnet,**
**dass** die Küvette (11) zwei parallele, quer zum Strahlengang angeordnete Seitenwände (21, 22) aufweist.

6. Vorrichtung nach einem der Ansprüche 3 bis 5,
**dadurch gekennzeichnet,**
**dass** die Küvette (11) zwei Öffnungen (19, 20) aufweist.

7. Vorrichtung nach Anspruch 6,
**dadurch gekennzeichnet,**
**dass** die Öffnungen (19, 20) verschließbar sind.

8. Vorrichtung nach einem der Ansprüche 6 oder 7,
**dadurch gekennzeichnet,**
**dass** die Öffnungen (19, 20) mit Abstand zueinander auf einer Oberseite der Küvette (11) angeordnet sind.

9. Vorrichtung nach einem der Ansprüche 3 bis 8,
**dadurch gekennzeichnet,**
**dass** das Kalibriervolumen (18) in einem unteren Bereich eine bogenförmige, vorzugsweise U-förmige, Kontur aufweist.

10. Vorrichtung nach einem der Ansprüche 3 bis 9,
**dadurch gekennzeichnet,**
**dass** auf der Oberseite der Küvette (11) eine lichtundurchlässige Deckplatte (13) angeordnet ist.

11. Vorrichtung nach einem der Ansprüche 3 bis 10,
**dadurch gekennzeichnet,**
**dass** die Küvette (11) Positioniermittel (14, 15) zur exakten Positionierung in den Haltemitteln (10) aufweist.

12. Kalibrierverfahren für die Vermessung eines Fluids mit einer Inline-Photometervorrichtung mit folgenden Verfahrensschritten:
- Bestimmung des Absorptionsverhalten eines mit Referenzfluid gefüllten Referenzteils, insbesondere einer Küvette, in einem hochgenauen Spektrometer, insbesondere einem Laborspektrometer,
- Einsetzen des mit Referenzfluid gefüllten Referenzteils in dem Strahlengang einer Inline-Photometervorrichtung, insbesondere außerhalb einer von dem zu vermessenden Prozessfluid durchflossenen Messzelle,
- Kalibrierung der Inline-Photometervorrichtung mit dem vorher bestimmten Absorptionsverhalten des mit Referenzfluid gefüllten Referenzteils.

13. Kalibrierverfahren nach Anspruch 12, bei dem als Referenzfluid das Prozessfluid verwendet wird.
